# EUROPEAN PATENT APPLICATION

(11) **EP 3 952 318 A1**
(43) Date of publication of application: **09.02.2022**
(21) Application number: 20924078.7
(22) Date of filing: 10.09.2020
(51) Int. Cl.: H04N 21/44, H04N 21/238

(54) **VIDEO STREAM PLAYBACK METHOD, SYSTEM AND TERMINAL, AND STORAGE MEDIUM**

(30) Priority: 09.03.2020 CN 202010159919
(71) Applicant: Shenzhen Skyworth-RGB Electronic Co., Ltd., Shenzhen, Guangdong 518057 (CN)
(72) Inventor: WU, Yiwen, Shenzhen, Guangdong 518057 (CN); XU, Huifu, Shenzhen, Guangdong 518057 (CN); HOU, Zhilong, Shenzhen, Guangdong 518057 (CN); GUO, Zhijun, Shenzhen, Guangdong 518057 (CN)
(74) Representative: Osterhoff, Utz
(86) International application number: PCT/CN2020/114388
(87) International publication number: WO 2021/179557

(57) **Abstract**

The present application discloses a video stream playing method, a system, a terminal and a storage medium. The method includes following steps: receiving audio and video data sent by a server in real time and storing the received audio and video data in a buffer area; moving audio and video data firstly stored in the buffer area to an area to be decoded in real time; and extracting audio and video data firstly stored in the area to be decoded in real time, and decoding and playing the audio and video data firstly stored in the area to be decoded.

## Description

### CROSS REFERENCES TO RELATED APPLICATIONS

This application claims the priority of a Chinese patent application No. 202010159919.0 filed with the Chinese Patent Office on March 9, 2020, and titled "Video Stream Playing Method, System, Terminal and Storage Medium", the entire contents of which are incorporated in this application by reference.

### TECHNICAL FIELD

The present application relates to the field of intelligent terminals, in particular to a video stream playing method, a system, a terminal and a computer readable storage medium.

### BACKGROUND

At present, most of the network videos and audios played on TV are transmitted in the form of data stream. However, in the current video stream playing technology, the acquired video frames will be immediately sent to a decoder for decoding, resulting in uneven amount of video data to be decoded by the decoder in unit time, and increasement of decoding pressure of the decoder in a short time, the video data is easily lost or disordered, therefore causing frame loss, jamming, jumping and/or sudden stop of playing in a playing process.

### SUMMARY

The main purpose of the application is to provide a video stream playing method, a system, a terminal and a computer-readable storage medium, aiming at solving problems of frame dropping, jamming, jumping and/or sudden stop of playing caused by received video data being immediately sent to a decoder for decoding in the prior video stream playing technology.

In order to achieve the above purpose, the present application provides a video stream playing method, including following steps:
receiving audio and video data sent by a server in real time and storing the received audio and video data in a buffer area;
moving audio and video data firstly stored in the buffer area to an area to be decoded in real time; and
extracting audio and video data firstly stored in the area to be decoded in real time, and decoding and playing the audio and video data firstly stored in the area to be decoded.

In one embodiment, the step of moving the audio and video data firstly stored in the buffer area to the area to be decoded in real time includes:
determining whether a number of audio and video data currently stored in the area to be decoded reaches a first preset threshold; and
moving the audio and video data firstly stored in the buffer area to the area to be decoded in real time in a determination that the number of the audio and video data currently stored in the area to be decoded does not reach the first preset threshold.

In one embodiment, the step of receiving the audio and video data sent by the server in real time includes:
acquiring a number of currently stored audio and video data in the area to be decoded;
determining whether the number of the currently stored audio and video data in the area to be decoded reaches a second preset threshold less than the first preset threshold;
adopting a preset first download rate to receive the audio and video data sent by the server in real time, in a determination that the number of the currently stored audio and video data in the area to be decoded does not reach the second preset threshold;
adopting a preset second download rate to receive the audio and video data sent by the server in real time, in a determination that the number of the currently stored audio and video data in the area to be decoded reaches the second preset threshold, wherein the second download rate is less than the first download rate.

In one embodiment, before the step of adopting a preset second download rate to receive the audio and video data sent by the server in real time, the method further includes:
determining whether the number of audio and video data currently stored in the buffer area reaches a third preset threshold;
adopting the preset second download rate to receive the audio and video data sent by the server in real time, in a determination that the number of audio and video data currently stored in the buffer area does not reach the third preset threshold;
adopting a preset third download rate to receive the audio and video data sent by the server in real time, in a determination that the number of audio and video data currently stored in the buffer area reaches the third preset threshold, wherein the third download rate is less than the second download rate.

In one embodiment, before the step of receiving the audio and video data sent by the server in real time, the method further includes:
adopting a TCP protocol to establish communication with the server;
sending a video acquisition request to the server so that the server sends audio and video data according to the video acquisition request.

In one embodiment, the step of decoding and playing the audio and video data stored firstly in the area to be decoded includes:
decoding the audio and video data stored firstly in the area to be decoded to obtain video data and audio data; and
playing the video data and the audio data synchronously.

In one embodiment the step of decoding the audio and video data stored firstly in the area to be decoded to obtain the video data and the audio data includes:
adopting a video stream separator to separate the firstly stored audio and video data in the area to be decoded into video data and audio data corresponding to the video data; and
decoding, using a video decoder and a sound decoder, the separated video data and audio data corresponding to the video data to obtain the video data to be played and the audio data to be played corresponding to the video data to be played.

In one embodiment, before the step of playing the video data and the audio data synchronously, the method further includes:
rendering the video data and the audio data to obtain rendered video data and
rendered audio data;
the step of playing the video data and the audio data synchronously includes:
playing the rendered video data and the rendered audio data synchronously.

In one embodiment, the number of audio and video data stored in the buffer area is set with a fourth preset threshold value greater than the third preset threshold value; receiving the audio and video data sent by the server in real time further includes:
sending a stop instruction to the server to suspend receiving the audio and video data sent by the server, in a determination that the number of audio and video data currently stored in the area to be decoded reaches the second preset threshold and the number of audio and video data currently stored in the buffer area reaches the fourth preset threshold.

To realize the purpose above, the present application provides a video streaming playing system including:
a receiving module configured for receiving the audio and video data sent by the server in real time and storing the received audio and video data in the buffer area;
a transfer module configured for moving the audio and video data firstly stored in the buffer area to the area to be decoded in real time;
an extraction module configured for real-time extracting the firstly stored audio and video data in the area to be decoded, and decoding and playing the firstly stored audio and video data in the area to be decoded.

To realize the purpose above, the present application further provides a terminal, in particular the terminal includes a memory, a processor, and a computer program stored on the memory and executable on the processor, the computer program being executed by the processor carrying out the steps of the video stream playing method of any one of claims 1 to 9.

To realize the purpose above, the present application further provides a computer-readable storage medium, in particular a computer program is stored on the computer-readable storage medium, implementing the steps of the video stream playing method of any one of claims 1 to 9, when the computer program is executed by a processor.

The present application discloses a video stream playing method, a system, a terminal and a computer readable storage medium, which receives audio and video data sent by a server in real time and stores the received audio and video data in a buffer area; moves the audio and video data firstly stored in the buffer area to the area to be decoded in real time. The audio and video data firstly stored in the area to be decoded is extracted in real time, and the audio and video data firstly stored in the area to be decoded is decoded and played. By setting a buffer area for storing audio and video data and an area to be decoded, the acquired video data is avoided being immediately sent to the decoder for decoding, causing an amount of video data that the decoder needs to decode in unit time is uneven, therefor causing the decoding pressure of the decoder to increase in a short time. Thereby, a problem of picture jamming occurs, and in a process that the video data receives a decoded code, the video data enters the buffer area first and then enter the area to be decoded, and adopt a first-in-first-out strategy for the audio and video data stored in the two areas, so as to ensure that the received audio and video data are processed in sequence, effectively avoiding problems such as playing picture jumping, and better improve the user experience.

### BRIEF DESCRIPTION OF THE DRAWINGS

FIG. 1 is a structural schematic diagram of a hardware running environment related to embodiments of the present application.
FIG. 2 is a flow diagram of a first embodiment of a video stream playing method of the present application.
FIG. 3 is a detailed flow diagram of step S20 in the first embodiment of the video stream playing method of the present application.
FIG. 4 is a detailed flow diagram of receiving audio and video data sent by a server in real-time in step S10 in a second embodiment of the video stream playing method of the present application.
FIG. 5 is a functional module diagram of a video streaming playing system of the present application.

The realization of the objective, functional features and advantages of the present application will be described in the embodiments with reference to the accompanying drawings in conjunction with the embodiments.

### DETAILED DESCRIPTION OF THE EMBODIMENTS

It should be understood that the specific embodiments described here are intended to be explanatory only and are not intended to limit the present application.

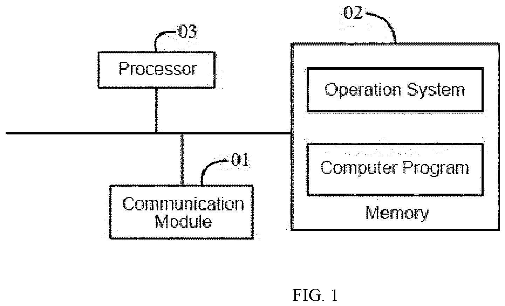

Please refer to FIG. 1, which is a schematic diagram of a hardware structure of a terminal provided in various embodiments of the present application. The terminal includes a communication module 01, a memory 02, a processor 03 and other components. Those skilled in the art will appreciate that the terminal shown in FIG. 1 may also include more or fewer components than illustrated or a combination of certain components or different component arrangements. In particular, the processor 03 is connected to the memory 02 and the communication module 01, and the computer program is stored on the memory 02 and executed by the processor 03.

The communication module 01 is configured to be connected with external devices through a network. The communication module 01 in configured to receive data sent by external devices, and is also configured to send data, instructions and information to the external devices, the external devices can be electronic devices such as mobile phones, tablet computers, notebook computers and desktop computers.

The memory 02 can be configured for storing software programs and various data. The memory 02 may mainly include a program area and a data area, in particular, the program area may store an operating system, an application program required for at least one function (real-time receiving audio and video data sent by a server), etc.. The data area may store data or information created according to a use of the terminal. Additionally, the memory 02 may include a high-speed random access memory and may also include a non-volatile memory such as at least one disk storage device flash memory device or other volatile solid-state storage device.

The processor 03 is a control center of the terminal, which connects various parts of the entire terminal by various interfaces and lines, executes various functions of the terminal and processes data by running or executing software programs and/or modules stored in the memory 02, and calls data stored in the memory 02, thereby monitoring the terminal as a whole. Processor 03 may include one or more processing units. Preferably, the processor 03 may integrate an application processor that mainly handles operating systems, user interfaces, application programs and the like, and a modem processor that mainly handles wireless communications. It will be understood that the modem processor described above may also not be integrated into the processor 03.

Although not shown in FIG. 1, the terminal may also include a circuit control module for connecting with a mains supply to realize power supply control and ensure a normal operation of other components.

Those skilled in the art will appreciate that the terminal structure shown in FIG. 1 does not constitute a limitation to the terminal and may include more or fewer components than illustrated, or a combination of certain components, or different component arrangements.

According to the above hardware structure, various embodiments of the method of the present application are presented.

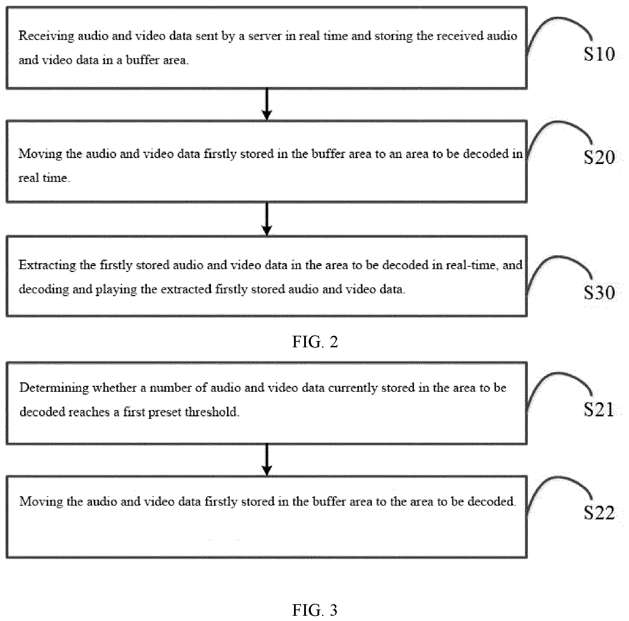

According to FIG. 2, in a first embodiment of the video stream playing method of the present application, the video stream playing method includes steps of:

Step S10, receiving audio and video data sent by a server in real time and storing the received audio and video data in a buffer area;

In this scheme, the terminal establishes connection and communication with the server through a wireless network or a wired network. At present, a communication between the terminal and the server includes two modes: a UDP and a TCP transmission protocols. TCP (Transmission Control Protocol) is a connection-oriented, reliable data flow service. Before exchanging data between the terminal and the server, it is necessary to establish a TCP connection between two parties before transmitting data. The TCP transmission provides functions such as timeout retransmission, discarding duplicate data, checking data, flow control, etc., so as to ensure that data can be transmitted from one end to the other. UDP (User Datagram Protocol) is a simple datagram-oriented transport layer protocol. UDP does not provide reliability, it just sends datagrams out, and does not guarantee that the datagrams can reach their destinations. Due to UDP does not establish a connection between a client and the server before transmitting data, and there is no mechanism such as timeout retransmission, so a transmission speed thereof is very fast. Video and audio data streams are continuous, so it is necessary to ensure a consistency of synchronization points. In order to adapt to this data transmission, a reliable connection-oriented TCP transmission protocol is provided in this scheme. After establishing a communication with the server, the terminal sends a video acquisition request to the server based on the requirement of the user, and the video acquisition request may include a video name and/or a video download address, so that the server can send the audio and video data of the corresponding video to the terminal in a video stream mode in real time according to the video acquisition request. The terminal receives the audio and video data sent by the server in real time, for the server transmits the video data to the terminal in a video stream mode, these audio and video data belong to a same video, and the video is divided into one audio and video data among a plurality of audio and video data. After receiving an audio and video data, the terminal stores the received audio and video data in a buffer area.

Step S20, moving the audio and video data firstly stored in the buffer area to an area to be decoded in real time. In a determination of receiving the audio and video data sent by the server in real time, terminal moves the audio and video data firstly stored in the buffer area out of the buffer area to the area to be decoded in real time.

Specifically, according to FIG. 3, which is a detailed flow diagram of the step of moving the audio and video data firstly stored in the buffer area to the area to be decoded in real time in an embodiment of the present application. Based on the above embodiment, Step S20 includes:
Step S21, determining whether a number of audio and video data currently stored in the area to be decoded reaches a first preset threshold;
Step S22, moving the audio and video data firstly stored in the buffer area to the area to be decoded, in a determination that the number of audio and video data currently stored in the area to be decoded does not reach the first preset threshold.

Specifically, in order to prevent excessive audio and video data from being stored in the area to be decoded, which takes up too much memory in the terminal, leading to a performance degradation of the system of the terminal, and affecting a decoding function of the terminal, the maximum size of data to be stored: the first preset threshold is set for the area to be decoded. Before moving the audio and video data firstly stored in the buffer area to the area to be decoded, the terminal first acquires the number of audio and video data currently stored in the area to be decoded, and determines whether the number of audio and video data currently stored in the area to be decoded reaches the first preset threshold. In a determination that the number does not reach the first preset threshold, the audio and video data firstly stored in the buffer area will be removed from the buffer area in real time and moved to the area to be decoded for storage. In a determination that the first preset threshold is reached, it temporarily stops moving the audio and video data firstly stored in the buffer area from the buffer area to the area to be decoded, acquires the size of audio and video data currently stored in the area to be decoded in real time, and determines whether the number of audio and video data currently stored in the area to be decoded reaches the first preset threshold. As long as it is determined that the size of audio and video data currently stored in the area to be decoded does not reach the first preset threshold, the audio and video data firstly stored in the buffer area is continuously removed from the buffer area and moved to the area to be decoded.

Step S30, extracting the firstly stored audio and video data in the area to be decoded in real-time, and decoding and playing the extracted firstly stored audio and video data.

When the terminal receives the audio and video data sent by the server in real time, the terminal further extracts the firstly stored audio and video data from the area to be decoded in real time, and decodes and plays the extracted firstly stored audio and video data.

Specifically, decoding and playing the audio and video data firstly stored in the area to be decoded in Step S30 further includes:
Step S31, decoding the audio and video data firstly stored in the area to be decoded to obtain video data and audio data;
Step S32, playing the video data and the audio data synchronously.

In this embodiment, a decoding tool is adopted, for example, DirectShow technology is adopted to decode the audio and video data firstly stored in the area to be decoded. Specifically, firstly, a video stream separator is adopted to separate the firstly stored audio and video data in the area to be decoded into video data and audio data corresponding to the video data, then the separated video data and the audio data corresponding to the video data are decoded by a video decoder and a sound decoder. The video data to be played and the audio data to be played corresponding to the video data to be played are obtained, and finally the video data to be played and the audio data to be played corresponding to the video data to be played are played synchronously.

In an embodiment, Step S32 of playing the video data and the audio data synchronously further includes:
Step S33, rendering the video data and the audio data to obtain the rendered video data and the rendered audio data;
Step S32 of playing the video data and the audio data synchronously includes:
Step S34, playing the rendered video data and the rendered audio data synchronously.

In order to improve quality and effect of video playing, after obtaining video data to be played and audio data to be played, before synchronously playing the video data to be played and the audio data corresponding to the video data to be played, a specific video rendering tool is used to render the video data to be played to obtain the rendered video data to be played, and an audio rendering tool is configured to render the audio data corresponding to the video data to be played to obtain the rendered audio data to be played.

It should be noted that, due to the tool for rendering video data are different from the tool for rendering audio data, therefore, in this example, the step of rendering the video data to obtain the rendered video data can be performed before or after rendering the audio data to obtain the rendered audio data. Or the step of rendering the video data to obtain the rendered video data can be performed at the time of rendering the audio data to obtain the rendered audio data. An execution order of the step of rendering the video data and the step of rendering the audio data is not limited here.

It should be noted that Step S20 is executed when it is determined that audio and video data are stored in the buffer area, and step S30 is executed when it is determined that audio and video data are stored in the area to be decoded. An order among Steps S10, S20 and S30 is not limited here.

It should be noted that, in the process of video playing, if a user needs to change the video, the user will send a video replacement instruction to the terminal. After the terminal receives the video replacement instruction, the audio and video data stored in the buffer area and the area to be decoded are cleared. Of course, clearing the stored audio and video data in the area to be decoded may be carried out at a preset time after receiving the user's video replacement instruction. When the audio and video data in the buffer area is cleared, a video request is sent to the server. The video request includes a replaced video name and/or a replaced video download address, and the server stops the audio and video data currently being sent according to the new video request, and starts sending the audio and video data corresponding to the replaced video to the terminal. In the process of video playing, when the terminal receives a pause playing instruction sent by the user, the terminal sends a pause sending instruction to the server, so that the server stops sending audio and video data after receiving the pause sending instruction.

In this embodiment, the audio and video data are sent by the server in real time and stored in the buffer area; the audio and video data firstly stored in the buffer area are moved to the area to be decoded in real time; the audio and video data firstly stored in the area to be decoded are extracted in real time, and decoded and played. By setting an buffer area and an area to be decoded two such areas for storing the audio data and the video data, the terminal avoids the situation that the acquired video data are immediately sent to the decoder for decoding the amount of video data that the decoder needs to decode in unit time is uneven, causing that a decoding pressure of the decoder increases in a short time, and the problem of video jamming occurs. And in the process from receiving the audio and video data to decoding the audio and video data, the audio and video data enters the buffer area first and then enters the area to be decoded, and the first-in-first-out strategy is adopted for the audio and video data stored in the two areas, so as to ensure that the received audio and video data are processed in sequence, effectively avoid the problems such as playing picture jumping, and better improves the user experience.

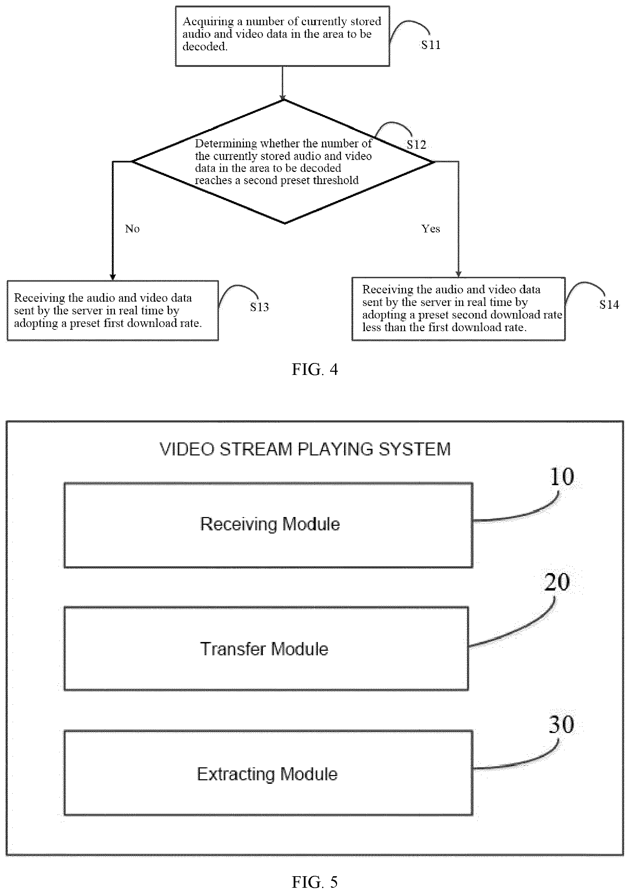

In one embodiment, please refer to FIG. 4, which is a second embodiment of the video stream playing method based on the first embodiment of the video stream playing method. In this embodiment, receiving audio and video data sent by the server in real time in Step S10 includes:
Step S11, acquiring a number of currently stored audio and video data in the area to be decoded;
Step S12, determining whether the number of the currently stored audio and video data in the area to be decoded reaches a second preset threshold larger than the second preset threshold; executing Step S13 in a determination that the number of the currently stored audio and video data in the area to be decoded does not reach the second preset threshold, and executing Step S14 in a determination that the number of the currently stored audio and video data in the area to be decoded reaches the second preset threshold;
Step S13, receiving the audio and video data sent by the server in real time by adopting a preset first download rate;
Step S14, receiving the audio and video data sent by the server in real time by adopting a preset second download rate less than the first download rate.

Since the terminal extracts audio and video data to be decoded from the area to be decoded for decoding, the audio and video data in the area to be decoded comes from the buffer area, the audio and video data in the buffer area comes from the audio and video data received real-time from server by the terminal. As the terminal continuously extracts audio and video data for decoding, when the amount of audio and video data currently stored in the area to be decoded is too small, due to there is no currently stored audio and video data in the area to be decoded, the decoding of the terminal is caused to stop, thereby causing the playing picture to stop. When the amount of audio and video data in the area to be decoded is large, the terminal may continuous decode. If the terminal continues to quickly receive audio and video data and has them stored, it will cause a large amount of audio and video data to be stored in the buffer area and the area to be decoded, and the memory of the terminal is occupied, a performance of the terminal system is affected, which affects the decoding and playing functions of the terminal, and leads to a stuck phenomenon. To solve the above problems, a second preset threshold is set in advance for the amount of audio and video data stored in the area to be decoded, the first preset threshold is greater than the second preset threshold. The terminal obtains the number of audio and video data currently stored in the area to be decoded in real time, and determines whether the number of audio and video data currently stored in the area to be decoded reaches the second preset threshold. If the number of audio and video data currently stored in the area to be decoded does not reach the second preset threshold, it means that the amount of audio and video data stored in the area to be decoded is too small, and a decoding pause may occur. It is necessary to speed up a rate of receiving audio and video data by the terminal, so the network download rate can be improved, that is, the audio and video data sent by the server can be received in real time by adopting the first download rate. If the number of audio and video data currently stored in the area to be decoded does not reach the second preset threshold, it means that the amount of audio and video data stored in the area to be decoded is too much, so there is no need to increase the amount of audio and video data stored in the terminal, and the network download rate can be reduced, that is, the audio and video data sent by the server may be received in real time by adopting the second download rate which is less than the first download rate.

According to the number of audio and video data currently stored in the area to be decoded, the present application adjusts a rate of receiving audio and video data from the server by the terminal, thereby avoiding a problem of video playing pause caused by too little audio and video data stored in the area to be decoded, and avoiding a problem of video decoding and playing jamming caused by too much audio and video data stored in the area to be decoded.

In one embodiment, a third embodiment of the video stream playing method of the present application is proposed based on the aforementioned embodiments of the video stream playing method of the present application. In this embodiment, Step S14 further includes:
Step S15, determining whether the number of audio and video data currently stored in the buffer area reaches a third preset threshold; executing Step S14 in a determination that the number of audio and video data currently stored in the buffer area does not reach a third preset threshold, and executing Step S16 in a determination that the number of audio and video data currently stored in the buffer area reaches a third preset threshold, Step S16 is executed;
Step S14, receiving the audio and video data sent by the server in real time by adopting the preset second download rate;
Step S16, receiving the audio and video data sent by the server in real time by adopting a preset third download rate less than the second download rate.

Even when the amount of audio and video data currently stored in the area to be decoded has reached the second preset threshold, and the download speed of the terminal has been reduced, the terminal may continue to receive audio and video data, and continue to store the audio and video data in the buffer area. There are still too many audio and video data currently stored in the buffer area, which occupy too much memory in the terminal system, and affect an operation of the terminal system. In order to control and avoid an influence on the operation of the system in this embodiment, a third preset threshold is set in advance for the amount of audio and video data stored in the buffer area. In addition to obtaining the number of audio and video data currently stored in the area to be decoded in real time, it also obtains the amount of audio and video data currently stored in the buffer area in real time. When the number of audio and video data currently stored in the area to be decoded has reached the second preset threshold, but the number of audio and video data currently stored in the buffer area does not reach the third preset threshold, the terminal adopts the preset second download rate to receive the audio and video data sent by the server in real time. When the amount of audio and video data currently stored in the area to be decoded has reached the second preset threshold, and the number of audio and video data stored in the buffer area currently has reached the third preset threshold, the terminal can continue to reduce the download rate, that is, the preset third download rate is adopted to receive the audio and video data sent by the server in real time, and the third download rate is less than the second download rate.

It should be explained that, in an embodiment, a fourth preset threshold may be set for the amount of audio and video data stored in the buffer area. The fourth preset threshold is greater than the third preset threshold. When the amount of audio and video data currently stored in the area to be decoded has reached the second preset threshold, and the amount of audio and video data currently stored in the buffer area has reached the fourth preset threshold, the terminal sends a stop instruction to the server, so that the server stops sending audio and video data according to the stop instruction, and the terminal suspends receiving the audio and video data sent by the server.

In this embodiment, when the amount of audio and video data currently stored in the area to be decoded reaches the second preset threshold, the speed of receiving audio and video data from the server by the terminal is adjusted according to the number of audio and video data currently stored in the buffer area, so as to avoid an influence of excessive number of audio and video data stored in the buffer area on the operation of the terminal system, and further avoid the system jamming phenomenon.

According to FIG. 5, the present application also provides a video streaming playing system including:
a receiving module 10, configured for receiving audio and video data sent by a server in real time and storing the received audio and video data in a buffer area;
a transfer module 20, configured for moving the audio and video data firstly stored in the buffer area to an area to be decoded in real time;
an extracting module 30, configured for extracting the audio and video data firstly stored in the area to be decoded in real time, and decoding and playing the extracted audio and video data.

In an embodiment, the transfer module 20 includes:
a first determining unit 21 for determining whether a number of audio and video data currently stored in the area to be decoded reaches a first preset threshold;
the transfer unit 22 is configured for moving the audio and video data firstly stored in the buffer area to the area to be decoded in real time in a determination that the number of audio and video data currently stored in the area to be decoded does not reach the first preset threshold value.

In an embodiment, the receiving module 10 includes:
an acquiring unit 11, configured for acquiring the number of currently stored audio and video data in the area to be decoded;
a second determining unit 12, configured for determining whether the number of the currently stored audio and video data in the area to be decoded reaches a second preset threshold larger than the second preset threshold;
a first receiving unit 13, configured for real-time receiving the audio and video data sent by the server at a preset first download rate in a determination that the number of the audio and video data currently stored in the area to be decoded does not reach the second preset threshold;
a second receiving unit 14, configured for real-time receiving audio and video data sent by the server at a preset second download rate in a determination that the number of audio and video data currently stored in the area to be decoded reaches the second preset threshold, the second download rate being less than the first download rate.

In an embodiment, the second receiving unit 14 further includes:
a determining sub-unit 141, configured for determining whether the number of audio and video data currently stored in the buffer area reaches a third preset threshold;
a first receiving sub-unit 142, configured for receiving the audio and video data sent by the server in real time by adopting the preset second download rate, in a determination that the amount of audio and video data currently stored in the buffer area does not reach a third preset threshold;
a second receiving sub-unit 143, configured for real-time receiving the audio and video data sent by the server using a preset third download rate less than the second download rate, in a determination that the number of audio and video data currently stored in the buffer area reaches the third preset threshold.

In an embodiment, the video stream playing system further includes:
a connection module 40, configured for establishing connection and communication with the server based on TCP protocol.
a sending module 50, configured for sending a video acquisition request to the server, so that the server can send audio and video data according to the video acquisition request.

In an embodiment, the extraction module 30 includes:
a decoding unit 31 for decoding audio and video data stored firstly in the area to be decoded to obtain video data and audio data;
a playing unit 32, configured for playing the video data and the audio data synchronously.

In an embodiment, the extraction module 30 further includes:
a rendering unit 33, configured for rendering the video data and the audio data to obtain the rendered video data and the rendered audio data;
a playing unit 32 includes: a playing sub-unit 321, configured for playing the rendered video data and the rendered audio data synchronously.

The present application further provides a computer readable storage medium on which a computer program is stored. The computer-readable storage medium may be a memory 02 of the terminal of FIG. 1, or at least one of a ROM (Read-Only Memory)/RAM (Random Access Memory), a magnetic disk, and an optical disk, and the computer-readable storage medium includes information to enable the terminal to perform the methods described in various embodiments of the present application.

It should be noted that, in this article, the terms "include", "include" or any other variation thereof are intended to encompass non-exclusive inclusion, so that a process, method, article or system that includes a set of elements including not only those elements but also other elements that are not explicitly listed or that are inherent to such a process, method, article or system. In the absence of further limitations, an element defined by the sentence "includes an ..." does not preclude the existence of another identical element in the process, method, article or system in which it is included.

The above serial numbers of the embodiments of the present application are for description only and do not represent advantages and disadvantages of the embodiments.

From the above description of the embodiments, it will be clear to those skilled in the art that the method of the above embodiments can be implemented by means of software plus the necessary common hardware platform, and of course also by means of hardware, but in many cases the former is preferred.

The above are only preferred embodiments of the present application, and are not therefore limiting the patent scope of the present application. Any equivalent structure or equivalent process transformation made by using the contents of the specification and drawings of the present application, or directly or indirectly applied to other related technical fields, are equally included in the patent protection scope of the present application.

## Claims

1. A video stream playing method, comprising following steps:
receiving audio and video data sent by a server in real time and storing the received audio and video data in a buffer area;
moving audio and video data firstly stored in the buffer area to an area to be decoded in real time; and
extracting audio and video data firstly stored in the area to be decoded in real time, and decoding and playing the audio and video data firstly stored in the area to be decoded.

2. The video stream playing method of claim 1, wherein the step of moving the audio and video data firstly stored in the buffer area to the area to be decoded in real time comprises:
determining whether a number of audio and video data currently stored in the area to be decoded reaches a first preset threshold; and
moving the audio and video data firstly stored in the buffer area to the area to be decoded in real time in a determination that the number of the audio and video data currently stored in the area to be decoded does not reach the first preset threshold.

3. The video stream playing method of claim 2, wherein the step of receiving the audio and video data sent by the server in real time comprises:
acquiring a number of currently stored audio and video data in the area to be decoded ;
determining whether the number of the currently stored audio and video data in the area to be decoded reaches a second preset threshold less than the first preset threshold;
adopting a preset first download rate to receive the audio and video data sent by the server in real time, in a determination that the number of the currently stored audio and video data in the area to be decoded does not reach the second preset threshold;
adopting a preset second download rate to receive the audio and video data sent by the server in real time, in a determination that the number of the currently stored audio and video data in the area to be decoded reaches the second preset threshold, wherein the second download rate is less than the first download rate.

4. The video stream playing method of claim 3, wherein, before the step of adopting a preset second download rate to receive the audio and video data sent by the server in real time, the method further comprises:
determining whether the number of audio and video data currently stored in the buffer area reaches a third preset threshold;
adopting the preset second download rate to receive the audio and video data sent by the server in real time, in a determination that the number of audio and video data currently stored in the buffer area does not reach the third preset threshold;
adopting a preset third download rate to receive the audio and video data sent by the server in real time, in a determination that the number of audio and video data currently stored in the buffer area reaches the third preset threshold, wherein the third download rate is less than the second download rate.

5. The video stream playing method of any one of claims 1 to 4, wherein before the step of receiving the audio and video data sent by the server in real time, the method further comprises:
adopting a TCP protocol to establish communication with the server;
sending a video acquisition request to the server so that the server sends audio and video data according to the video acquisition request.

6. The video stream playing method of claim 5, wherein, the step of decoding and playing the audio and video data stored firstly in the area to be decoded comprises:
decoding the audio and video data stored firstly in the area to be decoded to obtain video data and audio data; and
playing the video data and the audio data synchronously.

7. The video stream playing method of claim 6, wherein the step of decoding the audio and video data stored firstly in the area to be decoded to obtain the video data and the audio data comprises:
adopting a video stream separator to separate the firstly stored audio and video data in the area to be decoded into video data and audio data corresponding to the video data; and
decoding, using a video decoder and a sound decoder, the separated video data and audio data corresponding to the video data to obtain the video data to be played and the audio data to be played corresponding to the video data to be played.

8. The video stream playing method of claim 6 or 7, wherein before the step of playing the video data and the audio data synchronously, the method further comprises:
rendering the video data and the audio data to obtain rendered video data and rendered audio data;
the step of playing the video data and the audio data synchronously comprises: playing the rendered video data and the rendered audio data synchronously.

9. The video stream playing method of claim 4, wherein the number of audio and video data stored in the buffer area is set with a fourth preset threshold value greater than the third preset threshold value; receiving the audio and video data sent by the server in real time further comprises:
sending a stop instruction to the server to suspend receiving the audio and video data sent by the server, in a determination that the number of audio and video data currently stored in the area to be decoded reaches the second preset threshold and the number of audio and video data currently stored in the buffer area reaches the fourth preset threshold.

10. A video streaming playing system comprising:
a receiving module configured for receiving audio and video data sent by a server in real time and storing the received audio and video data in a buffer area;
a transfer module configured for moving audio and video data firstly stored in the buffer area to an area to be decoded in real time; and
an extracting module configured for extracting audio and video data firstly stored in the area to be decoded in real time, and decoding and playing the extracted audio and video data.

11. The video stream playing system of claim 10, wherein the transfer module comprises:
a first determining unit configured for determining whether a number of audio and video data currently stored in the area to be decoded reaches a first preset threshold;
a transfer unit configured for moving the audio and video data firstly stored in the buffer area to the area to be decoded in real time in a determination that the number of the audio and video data currently stored in the area to be decoded does not reach the first preset threshold value.

12. The video stream playing system of claim 11, wherein the receiving module comprises:
an acquiring unit configured for acquiring the number of the audio and video data currently stored in the area to be decoded;
a second determining unit configured for determining whether the number of the currently stored audio and video data in the area to be decoded reaches a second preset threshold larger than the second preset threshold;
a first receiving unit configured for real-time receiving the audio and video data sent by the server at a preset first download rate in a determination that the number of the audio and video data currently stored in the area to be decoded does not reach the second preset threshold; and
a second receiving unit configured for real-time receiving the audio and video data sent by the server at a preset second download rate in a determination that the number of the audio and video data currently stored in the area to be decoded reaches the second preset threshold, the second download rate being less than the first download rate.

13. The video stream playing system of claim 12, wherein the second receiving unit further comprises:
a determining sub-unit configured for determining whether the number of the audio and video data currently stored in the buffer area reaches a third preset threshold;
a first receiving sub-unit configured for receiving the audio and video data sent by the server in real time by adopting the preset second download rate, in a determination that the number of the audio and video data currently stored in the buffer area does not reach a third preset threshold;
a second receiving sub-unit configured for real-time receiving the audio and video data sent by the server using a preset third download rate less than the second download rate, in a determination that the number of the audio and video data currently stored in the buffer area reaches the third preset threshold.

14. The video streaming playing system of any one of claims 10 to 13, wherein the video streaming playing system further comprises:
a connection module configured for establishing connection and communication with the server based on TCP protocol.
a sending module configured for sending a video acquisition request to the server, so that the server sends the audio and video data according to the video acquisition request.

15. The video stream playing system of claim 14, wherein the extraction module comprises:
a decoding unit configured for decoding the audio and video data firstly stored in the area to be decoded to obtain video data and audio data;
a playing unit configured for playing the video data and the audio data synchronously.

16. The video stream playing system of claim 15, wherein the decoding unit is configured for separating the audio and video data firstly stored in the area to be decoded into the video data and the audio data corresponding to the video data using a video stream separator, and decoding the separated video data and the audio data corresponding to the video data using a video decoder and a sound decoder to obtain the video data to be played and the audio data to be played corresponding to the video data to be played.

17. The video stream playing system of claim 15 or 16, wherein the extraction module further comprises:
a rendering unit configured for rendering the video data and the audio data to obtain the rendered video data and the rendered audio data;
the playing unit comprises:
a playing sub-unit configured for playing the rendered video data and the rendered audio data synchronously.

18. The video stream playing system of claim 13, wherein, the number of the audio and video data stored in the buffer area is set with a fourth preset threshold greater than the third preset threshold value, the receiving module is configured for sending a stop instruction to the server to suspend receiving the audio and video data sent by the server in a determination that the number of the audio and video data currently stored in the area to be decoded reaches the second preset threshold and the number of the audio and video data currently stored in the buffer area reaches the fourth preset threshold.

19. A terminal, wherein the terminal comprises a memory, a processor, and a computer program stored on the memory and executable by the processor, the computer program being executed by the processor to carry out the steps of the video stream playing method of any one of claims 1 to 9.

20. A computer-readable storage medium, wherein a computer program is stored on the computer-readable storage medium, the computer program is executable by a processor to carry out the steps of the video stream playing method of any one of claims 1 to 9.
